# EUROPÄISCHE PATENTSCHRIFT

(11) **EP 1 079 153 B1**
(45) Veröffentlichungstag und Bekanntmachung des Hinweises auf die Patenterteilung: **06.10.2004**
(21) Anmeldenummer: 00117754.2
(22) Anmeldetag: 17.08.2000
(51) Int. Cl.: F16H 61/46

(54) **Hydrostatischer Fahrantrieb mit Antischlupfregelung**
Hydrostatic transmission with antislip control
Transmission hydrostatique avec commande antiglissement

(30) Priorität: 20.08.1999 DE 19939474
(43) Veröffentlichungstag der Anmeldung: 28.02.2001
(73) Patentinhaber: Brueninghaus Hydromatik GmbH, 89275 Elchingen (DE)
(72) Erfinder: Sigmund, Günther, 89192 Rammingen (DE)
(74) Vertreter: Körfer, Thomas, Dipl.-Phys.

(56) Entgegenhaltungen:
- EP-A- 0 740 091
- DE-A- 2 739 968
- DE-A- 3 346 481
- DE-A- 19 638 421

## Beschreibung

Die Erfindung betrifft einen hydrostatischen Fahrantrieb mit Antischlupfregelung, entsprechend dem jeweiligen Oberbegriff der Ansprüche 1 und 6.

Ein hydrostatischer Fahrantrieb nach dem jeweiligen Oberbegriff der Ansprüche 1 und 6 ist beispielsweise aus der EP 0 740 091 B1 bekannt. Bei dem aus dieser Druckschrift hervorgehenden hydrostatischen Fahrantrieb sind zwei über Verstellvorrichtungen verstellbare Hydromotoren in einem Arbeitskreislauf parallel angeordnet und parallel mit einer Hydropumpe verbunden. Das Verdrängungsvolumen der Hydromotoren wird durch Ansteuern der Verstellvorrichtungen über Förderstromregelventile auf einen weitgehend konstanten Förderstrom eingeregelt. Hierzu sind in den Arbeitsleitungen Drosselstellen in Form von Meßblenden vorgesehen. Die sich an den Drosselstellen ergebenden Druckdifferenzen werden dem Förderstromregelventil zugeführt.

Wenn die Hydromotoren zwei voneinander getrennte Antriebsstränge antreiben, die beispielsweise mit verschiedenen Fahrzeugrädern verbunden sind, so tritt das Problem auf, daß eines der Fahrzeugräder aufgrund eines nicht griffigen Untergrunds einem Schlupf unterworfen sein kann. In diesem Fall dreht das entsprechende Fahrzeugrad durch und der hiermit verbundene Hydromotor ist einer erhöhten Drehzahl unterworfen. Diese erhöhte Drehzahl bedingt einen erhöhten Volumensstrom durch diesen Hydromotor. Der Volumenstrom durch den anderen, mit dem einzig noch mit dem Untergrund griffig in Verbindung stehenden, Hydromotor ist entsprechend reduziert, wodurch der Wirkungsgrad des hydrostatischen Antriebs vermindert ist.

Der Erfindung liegt die Aufgabe zugrunde, einen hydrostatischen Fahrantrieb nach dem jeweiligen Oberbegriff der Ansprüche 1 und 6 so weiterzubilden, daß bei einem Schlupf an einem der Antriebsstränge der Hydromotoren der Wirkungsgrad des hydrostatischen Fahrantriebs nicht wesentlich vermindert ist.

Die Aufgabe wird durch die kennzeichnenden Merkmale des Anspruchs 1 in Verbindung mit den gattungsbildenden Merkmalen gelöst.

Der Erfindung liegt die Erkenntnis zugrunde, daß eine Antischlupfregelung bei verschwenkbar ausgestatteten Hydromotoren in einfacher Weise dadurch erreicht werden kann, daß der die Verstellvorrichtungen der Hydromotoren ansteuernde Steuerdruck beim Auftreten eine Schlupfes an einem der Antriebsstränge der Hydromotoren so verändert wird, daß der von dem Schlupf betroffene Hydromotor auf minimales Verdrängungsvolumen zurückgeschwenkt wird und somit dem nicht von dem Schlupf betroffenen anderen Hydromotor ein unverminderter Volumenstrom zugeführt werden kann. Ein hydraulischer Kurzschluß durch den von dem Schlupf betroffenen Hydromotor und somit eine Verminderung des Wirkungsrades wird auf diese Weise verhindert.

Das Steuerventil weist hierzu drei Ventilstellungen auf: In einer ersten Ventilstellung, welche das Steuerventil im Normalbetrieb einnimmt, wird den beiden Verstellvorrichtungen in etwa der gleiche Steuerdruck zugemessen. Tritt an einem der Hydromotoren ein Schlupf auf, so nimmt das Steuerventil eine der beiden anderen Ventilstellungen ein und mißt der Verstellvorrichtung des von dem Schlupf betroffenen Hydromotors einen solchen Steuerdruck zu, daß diese Verstellvorrichtung den entsprechenden Hydromotor auf ein minimales Verdrängungsvolumen zurückschwenkt.

In den Unteransprüchen sind vorteilhafte Weiterbildungen der Erfindung angegeben.

Der Schlupf an den Hydromotoren kann hydraulisch erfaßt werden. Hierzu sind stromaufwärts oder stromabwärts der Hydromotoren Drosselstellen in Form von Meßblenden angeordnet.

Je nachdem ob, sich die Drosselstelle stromaufwärts oder stromabwärts des entsprechenden Hydromotors befindet, nimmt der Druck in der Arbeitsleitung zwischen dem Hydromotor und der Drosselstelle signifikant zu bzw. ab, wenn an dem entsprechenden Hydromotor ein Schlupf auftritt. Diese Druckzunahme bzw. Druckverminderung kann zur Ansteuerung des Steuerventils herangezogen werden. Beachtet werden muß jedoch, daß bei einem Drehrichtungswechsel der Hydromotoren und der damit verbundenen Strömungsrichtungsänderung sich die Position der Drosselstelle in dem Arbeitskreislauf verändert. Dies kann entweder in der Weise ausgeglichen werden, daß durch ein geeignetes Drehrichtungsventil die Position der Drosselstelle stromaufwärts bzw. stromabwärts des Hydromotors bei einem Drehrichtungswechsel geändert wird. Alternativ hierzu kann in den Verbindungsleitungen zwischen dem Steuerventil und den Hydromotoren ein Drehrichtungsventil vorgesehen sein, das bei einem Drehrichtungswechsel der Hydromotoren die zu den Verstellvorrichtungen der Hydromotoren führenden Steuerleitungen miteinander vertauscht.

Alternativ zu einer hydraulischen Ansteuerung des Steuerventils kann das Steuerventil auch mittels geeigneter Sensoren, beispielsweise mittels Drehzahlsensoren angesteuert werden. Dabei können Drehzahlsensoren eingesetzt werden, die die Drehzahlen der beiden Hydromotoren miteinander vergleichen. Tritt an einem der Hydromotoren eine deutlich höhere Drehzahl auf, so deutet dies auf einen Schlupf an dem von diesem Hydromotor angetriebenen Antriebsstrang hin. Das Steuerventil wird dann so angesteuert, daß die Verstellvorrichtung den betroffenen Hydromotor auf minimales Verdrängungsvolumen zurückschwenkt.

Ausführungsbeispiele der Erfindung sind in der Zeichnung vereinfacht dargestellt und werden nachfolgend erläutert. In der Zeichnung zeigen:
- Fig. 1: das hydraulische Prinzipschaltbild eines ersten Ausführungsbeispiels des erfindungsgemäßen Fahrantriebs;
- Fig. 2: das hydraulische Prinzipschaltbild eines zweiten Ausführungsbeispiels des erfindungsgemäßen Fahrantriebs;
- Fig. 3: das hydraulische und elektrische Prinzipschaltbild eines dritten Ausführungsbeispiels des erfindungsgemäßen Fahrantriebs; und
- Fig. 4: das hydraulische und elektrische Prinzipschaltbild eines vierten Ausführungsbeispiels des erfindungsgemäßen Fahrantriebs.

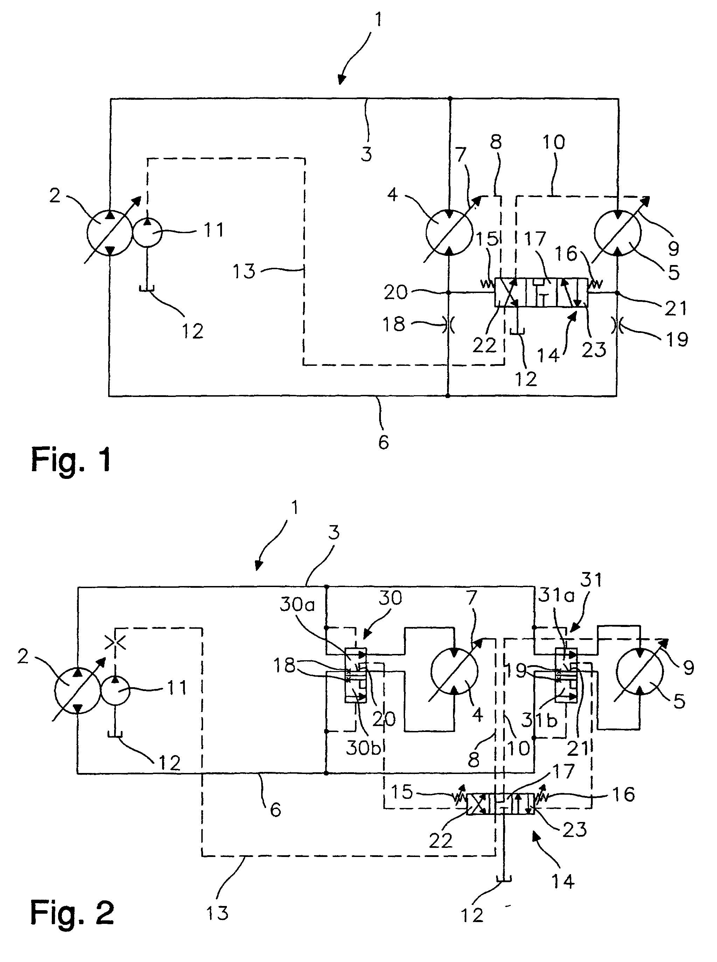

Fig. 1 zeigt ein erstes Ausführungsbeispiel des erfindungsgemäßen hydrostatischen Fahrantriebs 1. Eine im Ausführungsbeispiel verstellbare Hydropumpe 2 ist über eine erste Arbeitsleitung 3 mit einem ersten Hydromotor 4 und einem parallel zu dem ersten Hydromotor 4 angeordneten zweiten Hydromotor 5 verbunden. Die beiden Hydromotoren 4 und 5 sind über eine zweite Arbeitsleitung 6 mit der Hydropumpe 2 zu einem geschlossenen Arbeitskreislauf verbunden. Das Verdrängungsvolumen des ersten Hydromotors 4 ist mittels einer ersten Verstellvorrichtung 7 in Abhängigkeit von dem Steuerdruck in einer ersten Steuerdruckleitung 8 verstellbar. In gleicher Weise ist das Verdrängungsvolumen des zweiten Hydromotors 5 mittels einer zweiten Verstellvorrichtung 9 in Abhängigkeit von dem Steuerdruck in einer zweiten Steuerdruckleitung 10 verstellbar. Eine Steuerdruckquelle, die im dargestellten Ausführungsbeispiel eine Hilfspumpe 11 umfaßt, saugt Hydraulikfluid aus einem Hydraulikfluid-Tank 12 an und speist es in eine gemeinsame Steuerdruckleitung 13 ein. Zwischen der gemeinsamen Steuerdruckleitung 13 einerseits und der ersten Steuerdruckleitung 8 und der zweiten Steuerdruckleitung 10 andererseits befindet sich ein Steuerventil 14, das im Ausführungsbeispiel als 4/3-Wegeventil ausgebildet ist und im Normalbetrieb durch Zentrierfedern 15 und 16 in einer ersten Ventilstellung 17 zentriert ist. In der ersten Ventilstellung 17 sind die erste Steuerdruckleitung 8 und die zweite Steuerdruckleitung 10 in gleicher Weise mit der gemeinsamen Steuerdruckleitung 13 verbunden und erhalten somit von der Steuerdruckquelle 11 den gleichen Steuerdruck. In der gemeinsamen Steuerdruckleitung 13 können selbstverständlich auch weitere Steuerventile beispielsweise in Form eines Handsteuergebers oder dergleichen angeordnet sein, um einen von der Fahrsituation abhängigen gemeinsamen Steuerdruck in der gemeinsamen Steuerdruckleitung 13 zu erzeugen. Diese zusätzlichen Steuerventile sind in Fig. 1 aus Gründen der Vereinfachung nicht dargestellt.

Stromabwärts des ersten Hydromotors 4 befindet sich eine erste Drosselstelle 18 in Form einer ersten Meßblende. In entsprechender Weise befindet sich stromabwärts des zweiten Hydromotors 5 eine zweite Drosselstelle 19 in Form einer zweiten Meßblende. Der sich zwischen dem ersten Hydromotor 4 und der ersten Drosselstelle 18 einstellende Druck wird an einem ersten Meßpunkt 20 gemessen und einer ersten Druckkammer des Steuerventils 14 zugeführt. Entsprechend wird an einem Meßpunkt 21 zwischen dem zweiten Hydromotor 5 und der zweiten Drosselstelle 19 der sich dort einstellende Druck gemessen und einer gegenüberliegenden zweiten Druckkammer des Steuerventils 14 zugeführt.

Wenn an dem Antriebsstrang des ersten Hydromotors 4 aufgrund eines nicht griffigen Untergrunds ein Schlupf auftritt, so erhöht sich die Drehzahl des ersten Hydromotors 4 entsprechend. Dadurch erhöht sich der den ersten Hydromotor 4 passierende Volumenstrom, was zu einem Druckanstieg an dem ersten Meßpunkt 20 führt. Der Druck an dem zweiten Meßpunkt 21 bleibt hingegen weitgehend unverändert, so daß der Druck an dem ersten Meßpunkt 20 wesentlich höher ist als der Druck an dem zweiten Meßpunkt 21. Entsprechend wird das Steuerventil 14 in seine zweite Ventilstellung 22 verschoben, bei welcher nur noch die zu der Verstellvorrichtung 9 des zweiten Hydromotors 5 führende zweite Steuerdruckleitung 10 mit der gemeinsamen Steuerdruckleitung 13 verbunden ist. Die zu der Verstellvorrichtung 7 des ersten Hydromotors 4 führende erste Steuerdruckleitung 8 hingegen ist über das Steuerventil 14 mit dem Hydraulikfluid-Tank 12 verbunden. Die Verstellvorrichtungen 7 und 9 der beiden Hydromotoren 4 und 5 arbeiten im Ausführungsbeispiel in der Weise, daß die zugeordneten Hydromotoren 4 und 5 auf minimales Verdrängungsvolumen zurückgeschwenkt werden, wenn der Steuerdruck in der zugeordneten Steuerdruckleitung 8 bzw. 10 abfällt. Daher wird durch den Abfall des Steuerdrucks in der ersten Steuerdruckleitung 8 der Hydromotor 4 auf minimales Verdrängungsvolumen zurückgeschwenkt. Der von der Hydropumpe 2 erzeugte Volumenstrom steht deshalb an dem zweiten Hydromotor 5, dessen Antriebsstrang mit dem Untergrund noch in griffiger Verbindung steht, unvermindert zur Verfügung.

Solange der Antriebsstrang des ersten Hydromotors 4 von dem Schlupf betroffen ist, erfolgt der Antrieb ausschließlich über den zweiten Hydromotor 5. Nach Beseitigung des Schlupfes an dem dem ersten Hydromotor 4 zugeordneten Antriebsstrang stellen sich an den beiden Meßpunkten 20 und 21 wieder im wesentlichen übereinstimmende Drücke ein, so daß die beiden Steuerdruckleitungen 8 und 10 wieder mit dem gleichen Steuerdruck beaufschlagt werden und der erste Hydromotor 4 wieder ausschwenkt. Der Antrieb erfolgt dann wieder über beide Hydromotoren 4 und 5.

Wenn umgekehrt an dem dem zweiten Hydromotor 5 zugeordneten Antriebsstrang ein Schlupf auftritt, so steigt der Druck an dem zweiten Meßpunkt 21 wesentlich gegenüber dem Druck an dem ersten Meßpunkt 20 an. Entsprechend wird das Steuerventil 14 in seine dritte Ventilstellung 23 verschoben. In der dritten Ventilstellung 23 ist nur noch die mit der Verstellvorrichtung 7 des ersten Hydromotors 4 verbundene erste Steuerdruckleitung 8 mit der gemeinsamen Steuerdruckleitung 13 verbunden, während die mit der Verstellvorrichtung 9 des zweiten Hydromotors 5 verbundene zweite Steuerdruckleitung 10 mit dem Hydraulikfluid-Tank 12 verbunden ist. Entsprechend wird der zweite Hydromotor 5 auf minimales Verdrängungsvolumen zurückgeschwenkt und der Antrieb erfolgt ausschließlich über den ersten Hydromotor 4, solange der Schlupf an dem Antriebsstrang des zweiten Hydromotors 5 anhält.

Fig. 2 zeigt ein zweites Ausführungsbeispiel des erfindungsgemäßen hydrostatischen Fahrantriebs. In sämtlichen Figuren der Zeichnung sind übereinstimmende und bereits beschriebene Elemente mit übereinstimmenden Bezugszeichen versehen, um die Zuordnung zu erleichtern. Insoweit erübrigt sich eine wiederholende Beschreibung.

Das in Fig. 2 dargestellte Ausführungsbeispiel unterscheidet sich von dem anhand von Fig. 1 bereits beschriebenen Ausführungsbeispiel dadurch, daß dem ersten Hydromotor 4 ein erstes Drehrichtungsventil 30 und dem zweiten Hydromotor 5 ein zweites Drehrichtungsventil 31 vorgeschaltet ist. Wenn die Hydropumpe 4 ihre Drehrichtung ändert, so kehren sich die Druckverhältnisse in den beiden Arbeitsleitungen 3 und 6 um. War die Arbeitsleitung 3 vorher die Hochdruckleitung und die Arbeitsleitung 6 vorher die Niederdruckleitung, so wird die Arbeitsleitung 3 nunmehr die Niederdruckleitung und die Arbeitsleitung 6 nunmehr die Hochdruckleitung. Entsprechend kehren sich auch die Drehrichtungen der beiden Hydromotoren 4 und 5 in beabsichtigter Weise um. Bei dem in Fig. 1 dargestellten Ausführungsbeispiel wurde jedoch vorausgesetzt, daß sich die beiden Meßpunkte 20 und 21 stets stromabwärts der Hydromotoren 4 und 5 befinden. Bei einer Umkehr der Drehrichtung der Hydropumpe 2 bzw. auch der Hydromotoren 4 und 5 würde sich die Position der Drosselstellen 18 und 19 in der Weise ändern, daß die Drosselstellen 18 und 19 nunmehr stromaufwärts der Hydromotoren 4 und 5 liegen würden, was die Druckverhältnisse an den Meßpunkten 20 und 21 umkehren würde. Bei einem Drehrichtungswechsel ist deshalb darauf zu achten, daß sich die Meßdrosseln 18 und 19 entweder stets stromaufwärts der Hydromotoren 4 und 5 oder aber stets stromabwärts der Hydromotoren 4 und 5 befinden.

Zur Erfüllung dieser Voraussetzung dienen die Drehrichtungsventile 30 und 31 jedes Drehrichtungsventil 30 bzw. 31 hat eine erste Ventilstellung 30a bzw. 31a, die das Drehrichtungsventil 30 bzw. 31 einnimmt, wenn die Arbeitsleitung 3 Hochdruck führt. Die Drosselstelle 18 ist in dieser Ventilstellung mit der Niederdruck führenden Arbeitsleitung 6 verbunden und die Meßstelle 20 befindet sich stromaufwärts der Drosselstelle 18. Das Drehrichtungsventil 30 bzw. 31 nimmt seine zweite Ventilstellung 30b bzw. 31b ein, wenn die Arbeitsleitung 6 Hochdruck führt. In dieser Ventilstellung 30b bzw. 31b ist die Drosselstelle 18 mit der niederdruckführenden Arbeitsleitung 3 verbunden. Die vorbeschriebene Arbeitsweise des Steuerventils 14 ist deshalb unabhängig von der Dreh- bzw. Förderrichtung der Hydropumpe 2.

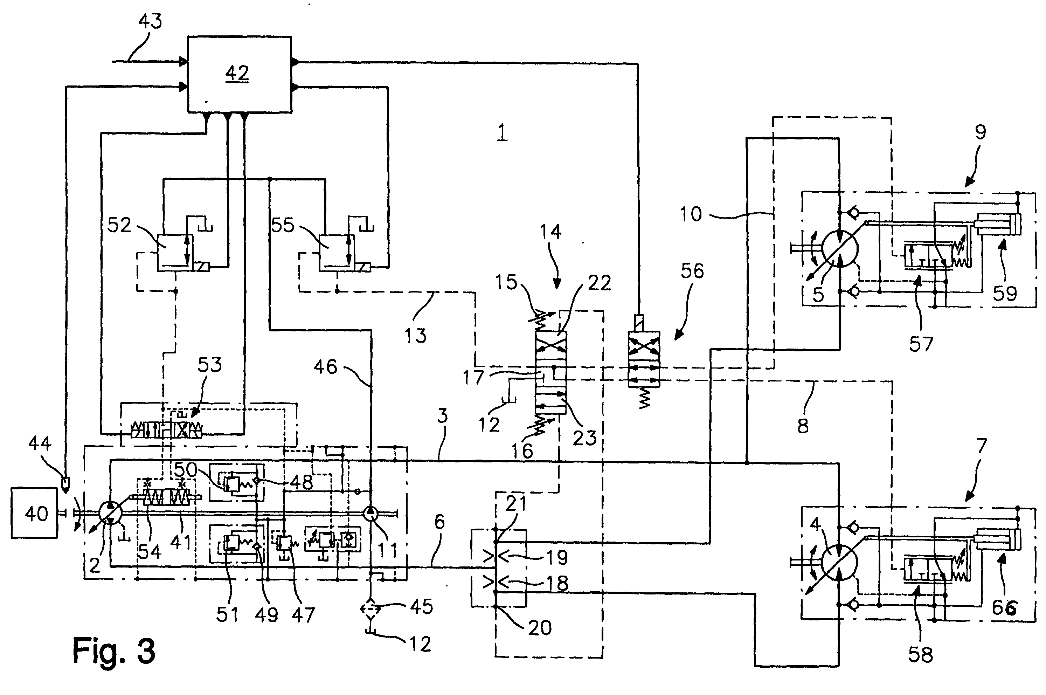

Fig. 3 zeigt ein hydraulisches und elektrisches Prinzipschaltbild eines dritten Ausführungsbeispiels der Erfindung.

Ein Verbrennungsmotor 40 treibt über eine Welle 41 sowohl die verstellbare Hydropumpe 2 als auch die Hilfspumpe 11 an. Die Hydromotoren 4 und 5 sind über die Arbeitsleitungen 3 und 6 mit der Hydropumpe 2 verbunden. Der hydrostatische Fahrantrieb 1 verfügt über eine elektronische Steuereinheit 42, die über eine Steuerleitung 43 ein elektronisches Steuersignal eines Hand- oder Fußsteuergebers erhält, mit welchem die Fahrtrichtung und die Fahrgeschwindigkeit vorgegeben wird. Über einen Drehzahlsensor 44 wird die Drehzahl der Welle 41 erfaßt.

Die Hilfspumpe 11 saugt Druckfluid über ein Filter 45 aus dem Hydraulikfluid-Tank 12 an und speist es in die Speiseleitung 46 ein. Zur Druckregulierung in der Speiseleitung 46 dient ein Druckbegrenzungsventil 47. Über Rückschlagventile 48 und 49 wird Hydraulikfluid in die jeweils Niederdruck führende Arbeitsleitung 3 bzw. 6 nachgespeist. Zur Druckbegrenzung des Arbeitsdrucks in der Hochdruck führenden Arbeitsleitung 3 bzw. 6 dienen Druckbegrenzungsventile 50 und 51.

Die Verstellung der Hydropumpe 2 erfolgt über ein elektromagnetisch angesteuertes Vorsteuerventil 52 und ein nachgeschaltetes, ebenfalls elektromagnetisch ansteuerbares, Steuerventil 53, welches einen Stelldruck für den Stellzylinder 54 zur Verstellung des Schwenkwinkels der Hydropumpe 2 erzeugt. Zur Erzeugung des beiden Hydromotoren 4 und 5 gemeinsamen Steuerdrucks aus dem Speisedruck in der Einspeiseleitung 46 dient ein elektromagnetisch ansteuerbares Vorsteuerventil 55, an welches die gemeinsame Steuerleitung 13 angeschlossen ist. Das Steuerventil 14 arbeitet in der vorbeschriebenen Weise und ist deshalb mit den Meßpunkten 20 und 21 stromaufwärts der Drosselstellen 18 und 19 verbunden, sofern die Arbeitsleitung 3 Hochdruck und die Arbeitsleitung 6 Niederdruck führt.

Jedoch ist zu beachten, daß sich die Druckverhältnisse an den Meßpunkten 20 und 21 umkehren, wenn die Arbeitsleitung 6 Hochdruck und die Arbeitsleitung 3 Niederdruck führen, da sich dann die Drosselstellen 18 und 19 stromaufwärts der Hydromotoren 4 bzw. 5 befinden. Eine Möglichkeit dies zu korrigieren, besteht wie anhand von Fig. 2 erläutert darin, die Lage der Drosselstellen 18 und 19 bei einem Drehrichtungswechsel bzw. bei einem Wechsel der Förderrichtung der Hydropumpe 2 zu verändern. Das in Fig. 3 dargestellte Ausführungsbeispiel sieht hingegen vor, die zu den Hydromotoren 4 und 5 führenden Steuerleitungen 8 und 10 bei einem Drehrichtungswechsel miteinander zu vertauschen. Hierfür ist dem Steuerventil 14 ein Drehrichtungsventil 56 nachgeschaltet, das von der elektronischen Steuereinheit 42 bei einem Drehrichtungswechsel elektromagnetisch betätigt wird. Das Drehrichtungsventil 56 ist im Fig. 3 dargestellten Ausführungsbeispiel als 4/2-Wegeventil ausgebildet.

Wie aus Fig. 3 ferner zu erkennen, umfassen die Verstellvorrichtungen 7 und 9 zur Verstellung des Schwenkwinkels des Hydromotoren 4 und 5 jeweils ein Stelldruckventil 57 bzw. 58, das in Abhängigkeit von dem in der Steuerleitung 8 bzw. 10 herrschenden Steuerdruck einen Stelldruck für den Stellzylinder 59 bzw. 66 erzeugt.

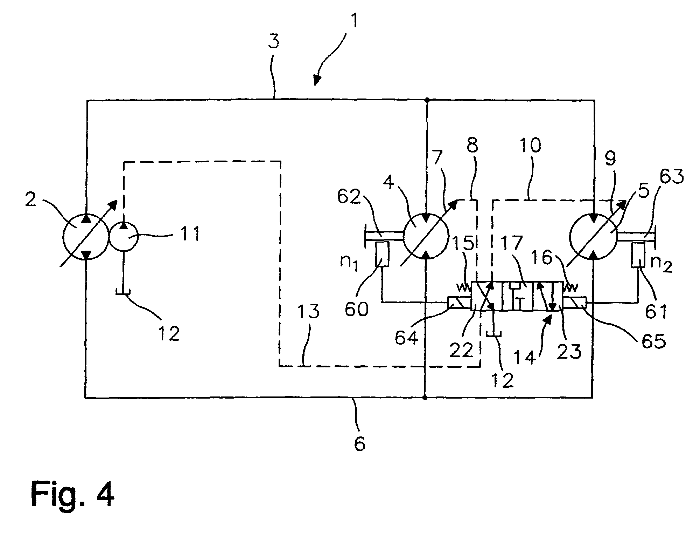

Fig. 4 zeigt ein viertes Ausführungsbeispiel eines erfindungsgemäßen hydrostatischen Fahrantriebs 1. Das Steuerventil 14 ist auch bei diesem Ausführungsbeispiel als 4/3-Wegeventil ausgebildet und hat die gleiche Funktion, wie die Steuerventile 14 bei den vorstehend erläuterten Ausführungsbeispielen. Der Unterschied besteht darin, daß das Steuerventil 14 bei dem in Fig. 4 dargestellten Ausführungsbeispiel nicht hydraulisch, sondern elektrisch mittels Drehzahlsensoren 60 und 61 angesteuert wird. An der Abtriebswelle 62 des ersten Hydromotors 4 befindet sich ein erster Drehzahlsensor 60 der die Drehzahl n₁ des ersten Hydromotors 4 mißt. An der Abtriebswelle 63 des zweiten Hydromotors 5 befindet sich ein zweiter Drehzahlsensor 61 der die Drehzahl n₂ des zweiten Hydromotors 5 mißt. Ein der Drehzahl des Hydromotors 4 bzw. 5 proportionales elektrisches Steuersignal wird jeweils einem Elektromagneten 64 bzw. 65 zugeführt.

Ist die Drehzahl n₁ des ersten Hydromotors 4 wesentlich größer als die Drehzahl n₂ des zweiten Hydromotors 5, so deutet dies auf einen Schlupf an dem ersten Hydromotor 4 hin. Die von dem Elektromagneten 64 auf den Ventilkolben des Steuerventils 14 ausgeübte Kraft überwiegt gegenüber der von dem Elektromagneten 65 ausgeübten Gegenkraft, so daß das Steuerventil 17 in seine zweite Ventilstellung 22 verschoben wird, was ein Zurückschwenken des ersten Hydromotors 4 bewirkt. In gleicher Weise wird der zweite Hydromotor 5 zurückgeschwenkt, wenn die Drehzahl n₂ des zweiten Hydromotors 5 wesentlich größer als die Drehzahl n₁ des ersten Hydromotors 4 ist.

Die Erfindung ist nicht auf die dargestellten Ausführungsbeispiele beschränkt. Zur Ansteuerung des Steuerventils 14 sind auch andere Steuergrößen und Sensoren in gleicher Weise geeignet.

## Patentansprüche

1. Hydrostatischer Fahrantrieb (1) mit
zumindest einer Hydropumpe (2),
zumindest einem mittels einer ersten Verstellvorrichtung (7) verstellbaren ersten Hydromotor (4) und einem mittels einer zweiten Verstellvorrichtung (9) verstellbaren zweiten Hydromotor (5) , die in einem hydraulischen Arbeitskreislauf (3,6) parallel mit der Hydropumpe (2) verbunden sind,
**gekennzeichnet durch**,
ein eingangsseitig mit einer Steuerdruckquelle (11,55) und ausgangsseitig mit den beiden Verstellvorrichtungen (7,9) verbundenes Steuerventil (14), das
in einer ersten Ventilstellung (17) den beiden Verstellvorrichtungen (7,9) in etwa den gleichen Steuerdruck zumißt,
in einer zweiten Ventilstellung (22) der Verstellvorrichtung (7) des ersten Hydromotors (4) einen solchen Steuerdruck zumißt, daß diese Verstellvorrichtung (7) den ersten Hydromotor (4) auf minimales Verdrängungsvolumen zurückschwenkt, wenn der Volumenstrom **durch** den ersten Hydromotor (4) wesentlich größer als **durch** den zweiten Hydromotor (5) ist, und
in einer dritten Ventilstellung (23) der Verstellvorrichtung (9) des zweiten Hydromotors (5) einen solchen Steuerdruck zumißt, daß diese Verstellvorrichtung (9) den zweiten Hydromotor (5) auf minimales Verdrängungsvolumen zurückschwenkt, wenn der Volumenstrom **durch** den zweiten Hydromotor (5) wesentlich größer als **durch** den ersten Hydromotor (4) ist,
sowie
eine stromaufwärts oder stromabwärts des ersten Hydromotors (4) angeordnete erste Drosselstelle (18) und eine stromaufwärts oder stromabwärts des zweiten Hydromotors (5) angeordnete zweite Drosselstelle (19),
wobei das Steuerventil (14) in Abhängigkeit von einer Druckdifferenz zwischen einem ersten Meßpunkt (20) zwischen dem ersten Hydromotor (4) und der ersten Drosselstelle (18) und einem zweiten Meßpunkt (21) zwischen dem zweiten Hydromotor (5) und der zweiten Drosselstelle (19) die Zumessung des Steuerdrucks für die beiden Verstellvorrichtungen (7,9) der Hydromotoren (4,5) verändert.

2. Hydrostatischer Fahrantrieb nach Anspruch 1,
**dadurch gekennzeichnet,**
**daß** die Drosselstellen (18,19) stromabwärts der Hydromotoren (4,5) angeordnet sind und die Verstellvorrichtungen (7,9) die Hydromotoren (4,5) mit abfallendem Steuerdruck zurückschwenken,
**daß** das Steuerventil (14) der ersten Verstellvorrichtung (7) einen abfallenden Steuerdruck zumißt, wenn der Druck an der ersten Meßstelle (20) höher als an der zweiten Meßstelle (21) ist, und
**daß** das Steuerventil (14) der zweiten Verstellvorrichtung (9) einen abfallenden Steuerdruck zumißt, wenn der Druck an der zweiten Meßstelle (21) höher als an der ersten Meßstelle (20) ist.

3. Hydrostatischer Fahrantrieb nach Anspruch 1,
**dadurch gekennzeichnet,**
**daß** die Drosselstellen (18,19) stromaufwärts der Hydromotoren (4,5) angeordnet sind und die Verstellvorrichtungen (7,9) die Hydromotoren (4,5) mit abfallendem Steuerdruck zurückschwenken,
**daß** das Steuerventil (14) der ersten Verstellvorrichtung (7) einen abfallenden Steuerdruck zumißt, wenn der Druck an der zweiten Meßstelle (21) höher als an der ersten Meßstelle (20) ist, und
**daß** das Steuerventil (14) der zweiten Verstellvorrichtung (9) einen abfallenden Steuerdruck zumißt, wenn der Druck an der ersten Meßstelle (20) höher als an der zweiten Meßstelle (21) ist.

4. Hydrostatischer Fahrantrieb nach einem der Ansprüche 1 bis 3,
**dadurch gekennzeichnet,**
**daß** jedem Hydromotor (4,5) ein Drehrichtungsventil (30,31) vorgeschaltet ist, durch welche die Drosselstellen (18,19) unabhängig von der Drehrichtung der Hydromotoren (4,5) stets stromabwärts oder stets stromaufwärts der Hydromotoren (4,5) angeordnet sind.

5. Hydrostatischer Fahrantrieb nach einem der Ansprüche 1 bis 3,
**dadurch gekennzeichnet,**
**daß** dem Steuerventil (14) ein Drehrichtungsventil (56) nachgeschaltet ist, das bei einem Drehrichtungswechsel der Hydromotoren (4,5) die Steuerleitungen (8,10) zwischen dem Steuerventil (14) und den Hydromotoren (4,5) miteinander vertauscht.

6. Hydrostatischer Fahrantrieb (1) mit
zumindest einer Hydropumpe (2),
zumindest einem mittels einer ersten Verstellvorrichtung (7) verstellbaren ersten Hydromotor (4) und einem mittels einer zweiten Verstellvorrichtung (9) verstellbaren zweiten Hydromotor (5) , die in einem hydraulischen Arbeitskreislauf (3,6) parallel mit der Hydropumpe (2) verbunden sind,
**gekennzeichnet durch,**
ein eingangsseitig mit einer Steuerdruckquelle (11,55) und ausgangsseitig mit den beiden Verstellvorrichtungen (7,9) verbundenes Steuerventil (14), das
in einer ersten Ventilstellung (17) den beiden Verstellvorrichtungen (7,9) in etwa den gleichen Steuerdruck zumißt,
in einer zweiten Ventilstellung (22) der Verstellvorrichtung (7) des ersten Hydromotors (4) einen solchen Steuerdruck zumißt, daß diese Verstellvorrichtung (7) den ersten Hydromotor (4) auf minimales Verdrängungsvolumen zurückschwenkt, wenn der Volumenstrom **durch** den ersten Hydromotor (4) wesentlich größer als **durch** den zweiten Hydromotor (5) ist, und
in einer dritten Ventilstellung (23) der Verstellvorrichtung (9) des zweiten Hydromotors (5) einen solchen Steuerdruck zumißt, daß diese Verstellvorrichtung (9) den zweiten Hydromotor (5) auf minimales Verdrängungsvolumen zurückschwenkt, wenn der Volumenstrom **durch** den zweiten Hydromotor (5) wesentlich größer als **durch** den ersten Hvdromotor (4) ist,
sowie an dem ersten Hydromotor (4) einen ersten Drehzahlsensor (60) zum Erfassen der Drehzahl (n₁) des ersten Hydromotors (4) und an dem zweiten Hydromotor (5) einen zweiten Drehzahlsensor (61) zum Erfassen der Drehzahl (n₂) des zweiten Hydromotors (5)
wobei das Steuerventil (14) in Abhängigkeit von einer Drehzahldifferenz (n₁-n₂) zwischen den Drehzahlen (n₁,n₂) der Hydromotoren (4,5) die Zumessung des Steuerdrucks für die beiden Verstellvorrichtungen (7,9) der Hydromotoren (4,5) verändert.

7. Hydrostatischer Fahrantrieb nach Anspruch 6,
**dadurch gekennzeichnet,**
**daß** die Verstellvorrichtungen (7,9) die Hydromotoren (4,5) mit abfallendem Steuerdruck zurückschwenken,
**daß** das Steuerventil (14) der ersten Verstellvorrichtung (7) einen abfallenden Steuerdruck zumißt, wenn die Drehzahl (n₁) an dem ersten Hydromotor (4) höher als die Drehzahl (n₂) an dem zweiten Hydromotor (5) ist, und
**daß** das Steuerventil (14) der zweiten Verstellvorrichtung (9) einen abfallenden Steuerdruck zumißt, wenn die Drehzahl (n₂) an dem zweiten Hydromotor (5) höher als die Drehzahl (n₁) an dem ersten Hydromotor ist.

## Claims

1. Hydrostatic transmission (1) having at least one hydraulic pump (2), at least one first hydraulic motor (4) adjustable by means of a first adjusting device (7) and a second hydraulic motor (5) adjustable by means of a second adjusting device (9), which in a hydraulic working circuit (3, 6) are connected parallel to the hydraulic pump (2), **characterised by** a control valve (14), connected on the input side to an actuating pressure source (11, 55) and on the output side to the two adjusting devices (7, 9), which in a first valve position (17) dispenses approximately the same actuating pressure to the two adjusting devices (7, 9), which in a second valve position (22) of the adjusting device (7) of the first hydraulic motor (4) dispenses such an actuating pressure, that this adjusting device (7) swings the first hydraulic motor (4) back to minimum displacement volume, if the flow rate through the first hydraulic motor (4) is substantially greater than through the second hydraulic motor (5), and which in a third valve position (23) of the adjusting device (9) of the second hydraulic motor (5) dispenses such an actuating pressure, that this adjusting device (9) swings the second hydraulic motor (5) back to minimum displacement volume, if the flow rate through the second hydraulic motor (5) is substantially greater than through the first hydraulic motor (4) as well as
a first throttle point (18) arranged upstream or downstream of the first hydraulic motor (4) and a second throttle point (19) arranged upstream or downstream of the second hydraulic motor (5), whereby the control valve (14) as a function of a differential pressure between a first measuring point (20) between the first hydraulic motor (4) and the first throttle point (18) and a second measuring point (21) between the second hydraulic motor (5) and the second throttle point (19) alters the amount of the actuating pressure dispensed to the two adjusting devices (7, 9) of the hydraulic motors (4, 5).

2. Hydrostatic transmission according to Claim 1,
**characterised in that** the throttle points (18, 19) are arranged downstream of the hydraulic motors (4, 5) and the adjusting devices (7, 9) swing back the hydraulic motors (4, 5) when the actuating pressure drops,
**in that** the control valve (14) of the first adjusting device (7) dispenses a reduced actuating pressure, if the pressure at the first measuring point (20) is higher than at the second measuring point (21), and
**in that** the control valve (14) of the second adjusting device (9) dispenses a reduced actuating pressure, if the pressure at the second measuring point (21) is higher than at the first measuring point (20).

3. Hydrostatic transmission according to Claim 1,
**characterised in that** the throttle points (18, 19) are arranged upstream of the hydraulic motors (4, 5) and the adjusting devices (7, 9) swing back the hydraulic motors (4,5) when the actuating pressure drops,
**in that** the control valve (14) of the first adjusting device (7) dispenses a falling actuating pressure, if the pressure at the second measuring point (21) is higher than at the first measuring point (20), and
**in that** the control valve (14) of the second adjusting device (9) dispenses a reduced actuating pressure, if the pressure at the first measuring point (20) is higher than at the second measuring point (21).

4. Hydrostatic transmission according to any one of Claims 1 to 3, **characterised in that** a direction of rotation valve (30, 31) precedes each hydraulic motor (4, 5), as a result of which the throttle points (18, 19) are always arranged downstream or upstream of the hydraulic motors (4, 5) irrespective of the direction of rotation of the hydraulic motors (4, 5).

5. Hydrostatic transmission according to any one of Claims 1 to 3, **characterised in that** a direction of rotation valve (56) follows the control valve (14), which when the direction of rotation of the hydraulic motors (4, 5) changes swaps the control lines (8, 10) between the control valve (14) and the hydraulic motors (4, 5) with one another.

6. Hydrostatic transmission (1) having at least one hydraulic pump (2), at least one first hydraulic motor (4) adjustable by means of a first adjusting device (7) and a second hydraulic motor (5) adjustable by means of a second adjusting device (9), which are connected in parallel with the hydraulic pump (2) in a hydraulic operating circuit (3, 6), **characterised by** a control valve (14), connected on the input side to an actuating pressure source (11, 55) and on the output side to the two adjusting devices (7, 9), which in a first valve position (17) dispenses approximately the same actuating pressure to the two adjusting devices (7, 9), which in a second valve position (22) of the adjusting device (7) of the first hydraulic motor (4) dispenses such an actuating pressure, that this adjusting device (7) swings the first hydraulic motor (4) back to minimum displacement volume, if the flow rate through the first hydraulic motor (4) is substantially greater than through the second hydraulic motor (5), and which in a third valve position (23) of the adjusting device (9) of the second hydraulic motor (5) dispenses such an actuating pressure that this adjusting device swings back the second hydraulic motor (5) to minimum displacement volume, if the flow rate through the second hydraulic motor (5) is substantially greater than through the first hydraulic motor (4) as well as on the first hydraulic motor (4) by a first speed sensor (60) for recording the rpm (n₁) of the first hydraulic motor (4) and on the second hydraulic motor (5) a second speed sensor (61) for recording the rpm (n₂) of the second hydraulic motor (5), whereby the control valve (14) as a function of a difference in the rpm (n₁ - n₂) between the rpm (n₁, n₂) of the hydraulic motors (4, 5) alters the amount of the actuating pressure dispensed to the two adjusting devices (7, 9) of the hydraulic motors (4, 5).

7. Hydrostatic transmission according to Claim 6,
**characterised in that** the adjusting devices (7, 9) swing back the hydraulic motors (4, 5) when the actuating pressure drops,
**in that** the control valve (14) of the first adjusting device (7) dispenses a reduced actuating pressure, if the rpm (n₁) of the first hydraulic motor (4) is greater than the rpm (n₂) of the second hydraulic motor (5) and
**in that** the control valve (14) of the second adjusting device (9) dispenses a reduced actuating pressure, if the rpm (n₂) on the second hydraulic motor (5) is greater than the rpm (n₁) of the first hydraulic motor.

## Revendications

1. Dispositif d'entraînement hydrostatique (1) comportant
au moins une pompe hydraulique (2),
au moins un premier moteur hydraulique (4) réglable à l'aide d'un premier dispositif de réglage (7) et un second moteur hydraulique (5) réglable à l'aide d'un second dispositif de réglage (9) et, ces moteurs hydrauliques étant reliés en parallèle à la pompe hydraulique (2) dans un circuit de travail hydraulique (3, 6),
**caractérisé par**
une soupape de commande (14) reliée côté entrée à une source de pression de commande (11, 55) et côté sortie aux deux dispositifs de réglage (7, 9) et qui
dans une première position (17), applique approximativement la même pression de commande aux deux dispositifs de réglage (7, 9),
dans une seconde position (22), applique au dispositif de réglage (7) du premier moteur hydraulique (4) une pression de commande telle que ce dispositif de réglage (7) fait basculer en retour le premier moteur hydraulique (4) sur un volume de refoulement minimum lorsque le flux volumique traversant le premier moteur hydraulique (4) est nettement supérieur à celui traversant le second moteur hydraulique (5), et
dans une troisième position (23), applique au dispositif de réglage (9) du second moteur hydraulique (5) une pression de commande telle que ce dispositif de réglage (9) fait basculer en retour le second moteur hydraulique (5) sur un volume de refoulement minimum, lorsque le flux volumique traversant le second moteur hydraulique (5) est nettement supérieur à celui traversant le premier moteur hydraulique (4),
ainsi qu'un premier organe d'étranglement (18), qui est disposé en amont ou en aval du premier moteur hydraulique (4), et un second organe d'étranglement (19), qui est disposé en amont ou en aval du second moteur hydraulique (5),
dans lequel la soupape de commande (14) modifie l'application de la pression de commande pour les deux dispositifs de réglage (7, 9) des moteurs hydrauliques (4, 5) en fonction d'une différence de pression entre le premier point de mesure (20) situé entre le premier moteur hydraulique (4) et le premier organe d'étranglement (18) et un second point de mesure (21) situé entre le second moteur hydraulique (5) et le second organe d'étranglement (19).

2. Dispositif d'entraînement hydrostatique selon la revendication 1, **caractérisé en ce**
**que** les organes d'étranglement (18, 19) sont disposés en aval des moteurs hydrauliques (4, 5) et que les dispositifs de réglage (7, 9) font basculer en retour les moteurs hydrauliques (4, 5) lorsque la pression de commande diminue,
**que** la soupape de commande (14) du premier dispositif de réglage (7) applique une pression de commande qui diminue, lorsque la pression au niveau du premier point de mesure (20) est plus élevée qu'au niveau du second point de mesure (21), et
**que** la soupape de commande (14) du second dispositif de réglage (9) applique une pression de commande, qui diminue, lorsque la pression au niveau du second point de mesure (21)est plus élevée qu'au niveau du premier point de mesure (20).

3. Dispositif d'entraînement hydrostatique selon la revendication 1, **caractérisé en ce**
**que** les organes d'étranglement (18, 19) sont disposés en amont des moteurs hydrauliques (4, 5) et que les dispositifs de réglage (7, 9) font basculer en retour les moteurs hydrauliques (4, 5) lorsque la pression de commande diminue,
**que** la soupape de commande (14) du premier dispositif de réglage (7) applique une pression de commande qui diminue, lorsque la pression au niveau du second point de mesure (21) est plus élevée qu'au niveau du premier point de mesure (20), et
**que** la soupape de commande (14) du second dispositif de réglage (9) applique une pression de commande, qui diminue, lorsque la pression au niveau du premier point de mesure (20) est plus élevée qu'au niveau du second point de mesure (21).

4. Dispositif d'entraînement hydrostatique selon l'une des revendications 1 à 3, **caractérisé en ce**
**qu'**en amont de chaque moteur hydraulique (4, 5) est disposée une soupape (30, 31) de commande du sens de rotation, à l'aide de laquelle les organes d'étranglement (18, 19) sont disposés en permanence en aval ou en permanence en amont des moteurs hydrauliques (4, 5), indépendamment du sens de rotation des moteurs hydrauliques (4, 5).

5. Dispositif d'entraînement hydrostatique selon l'une des revendications 1 à 3, **caractérisé en ce**
**qu'**en aval de la soupape de commande (14) est branchée une soupape (56) de commande du sens de rotation, qui, dans le cas d'un changement de sens de rotation des moteurs hydrauliques (4, 5) permute entre elles les canalisations de commande (8, 10) entre la soupape de commande (14) et les moteurs hydrauliques (4, 5).

6. Dispositif d'entraînement hydrostatique (1) comprenant:
au moins une pompe hydraulique (2),
au moins un premier moteur hydraulique (4) réglable à l'aide d'un premier dispositif de réglage (7) et un second moteur hydraulique (5) réglable à l'aide d'un second dispositif de réglage (9), ces moteurs hydrauliques étant reliés en parallèle à la pompe hydraulique (2) dans un circuit de travail hydraulique (3, 6),
**caractérisé par**
une soupape de commande (14) reliée côté entrée à une source de pression de commande (11, 55) et côté sortie aux deux dispositifs de réglage (7, 9) et qui
dans une première position (17), applique approximativement la même pression de commande aux deux dispositifs de réglage (7, 9),
dans une seconde position (22), applique au dispositif de réglage (7) du premier moteur hydraulique (4) une pression de commande telle que ce dispositif de réglage (7) fait basculer en retour le premier moteur hydraulique (4) sur un volume de refoulement minimum lorsque le flux volumique traversant le premier moteur hydraulique (4) est nettement supérieur à celui traversant le second moteur hydraulique (5), et
dans une troisième position (23), applique au dispositif de réglage (9) du second moteur hydraulique (5) une pression de commande telle que ce dispositif de réglage (9) fait basculer en retour le second moteur hydraulique (5) sur un volume de refoulement minimum, lorsque le flux volumique traversant le second moteur hydraulique (5) est nettement supérieur à celui traversant le premier moteur hydraulique (4),
ainsi que, sur le premier moteur hydraulique (4), un premier capteur de vitesse de rotation (60) pour détecter la vitesse de rotation (n₁) du premier moteur hydraulique (4) et sur le second moteur hydraulique (5) un second capteur de vitesse de rotation (61) pour détecter la vitesse de rotation (n₂) du second moteur hydraulique (5),
dans lequel la soupape de commande (14) modifie l'application de la pression de commande pour les deux dispositifs de réglage (7, 9) des moteurs hydrauliques (4, 5), en fonction d'une différence de vitesse de rotation (n₁-n₂) entre les vitesses de rotation (n₁, n₂) des moteurs hydrauliques (4, 5).

7. Dispositif d'entraînement hydrostatique selon la revendication 6, **caractérisé en ce**
**que** les dispositifs de réglage (7, 9) font basculer en retour les moteurs hydrauliques (4, 5) lorsque la pression de commande diminue,
**que** la soupape de commande (14) du premier dispositif de réglage applique une pression de commande qui diminue au premier dispositif de réglage (7), lorsque la vitesse de rotation (n₁) dans le premier moteur hydraulique (4) est supérieure à la vitesse de rotation (n₂) dans le second moteur hydraulique (5), et
**que** la soupape de commande (14) applique une pression de commande, qui diminue au second dispositif de réglage (9), lorsque la vitesse de rotation (n₂) dans le second moteur hydraulique (5) est supérieure à la vitesse de rotation (n₁) dans le premier moteur hydraulique.
